# EUROPEAN PATENT APPLICATION

(11) **EP 4 557 627 A1**
(43) Date of publication of application: **21.05.2025**
(21) Application number: 23839992.7
(22) Date of filing: 13.07.2023
(51) Int. Cl.: H04B 7/06, H04B 7/0456, H04B 17/373, H04B 7/0413, H04W 24/08, H04L 5/00, H04W 88/02

(54) **METHOD FOR TRANSMITTING CHANNEL STATUS INFORMATION IN WIRELESS COMMUNICATION SYSTEM, AND APPARATUS THEREFOR**

(30) Priority: 14.07.2022 KR 20220087164; 26.09.2022 KR 20220121986; 04.05.2023 KR 20230058578; 08.05.2023 US 202363464929 P
(71) Applicant: LG Electronics Inc., Yeongdeungpo-gu Seoul 07336 (KR)
(72) Inventor: KIM, Hyungtae, Seoul 06772 (KR); KANG, Jiwon, Seoul 06772 (KR); PARK, Haewook, Seoul 06772 (KR)
(74) Representative: Frenkel, Matthias Alexander
(86) International application number: PCT/KR2023/010026
(87) International publication number: WO 2024/014901

(57) **Abstract**

The present disclosure relates to a method by which a user equipment (UE) transmits prediction channel status information (CSI) in a wireless communication system. In particular, the method comprises the steps of: receiving, from a BS, a control signal for a prediction CSI report; receiving, from the BS, at least one measurement resource on the basis of the control signal for the prediction CSI report; measuring at least one prediction CSI related to one or more time instances on the basis of the at least one measurement resource; and transmitting, to the BS, the at least one prediction CSI, wherein a first minimum time interval until the at least one prediction CSI is transmitted after the control signal for the prediction CSI report is received is determined on the basis of the size of a measurement window, and the size of the measurement window is determined on the basis of the number of channel measurement resources (CMRs) from among the at least one measurement resource.

## Description

### TECHNICAL FIELD

The present disclosure relates to a wireless communication system and, more particularly, to a method of transmitting channel state information in a wireless communication system and device therefor.

### BACKGROUND

Wireless communication systems are being widely deployed to provide various types of communication services such as voice and data. In general, a wireless communication system is a multiple access system that can support communication with multiple users by sharing available system resources (bandwidth, transmission power, etc.). Examples of multiple access systems include code division multiple access (CDMA) systems, frequency division multiple access (FDMA) systems, time division multiple access (TDMA) systems, orthogonal frequency division multiple access (OFDMA) systems, and single carrier frequency division multiple access (SC-FDMA) systems.

### DISCLOSURE

### TECHNICAL PROBLEM

Hereinafter, a method of transmitting channel state information in a wireless communication system and device therefor will be described based on the above discussion.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

### TECHNICAL SOLUTION

In an aspect of the present disclosure, provided herein is a method of transmitting, by a user equipment (UE), predicted channel state information (CSI) to a base station (BS) in a wireless communication system. The method includes: receiving a control signal for predicted CSI reporting from the BS; receiving at least one measurement resource from the BS based on the control signal for the predicted CSI reporting; measuring at least one predicted CSI for one or more time instances based on the at least one measurement resource; and transmitting the at least one predicted CSI to the BS. A first minimum time interval from receiving the control signal for the predicted CSI reporting to transmitting the at least one predicted CSI is determined based on a size of a measurement window. The size of the measurement window is determined based on a number of channel measurement resources (CMRs) among the at least one measurement resource.

In another aspect of the present disclosure, provided herein is a UE in a wireless communication system. The UE includes: at least one transceiver; at least one processor; and at least one computer memory operably connected to the at least one processor and storing instructions that, when executed, cause the at least one processor to perform operations. The operations include: receiving a control signal for predicted CSI reporting from a BS; receiving at least one measurement resource from the BS based on the control signal for the predicted CSI reporting; measuring at least one predicted CSI for one or more time instances based on the at least one measurement resource; and transmitting the at least one predicted CSI to the BS. A first minimum time interval from receiving the control signal for the predicted CSI reporting to transmitting the at least one predicted CSI is determined based on a size of a measurement window. The size of the measurement window is determined based on a number of CMRs among the at least one measurement resource.

In another aspect of the present disclosure, provided herein is a processing device in a wireless communication system. The processing device includes: at least one processor; and at least one computer memory operably connected to the at least one processor and storing instructions that, when executed, cause the at least one processor to perform operations for a UE. The operations include: receiving a control signal for predicted CSI reporting from a BS; receiving at least one measurement resource from the BS based on the control signal for the predicted CSI reporting; measuring at least one predicted CSI for one or more time instances based on the at least one measurement resource; and transmitting the at least one predicted CSI to the BS. A first minimum time interval from receiving the control signal for the predicted CSI reporting to transmitting the at least one predicted CSI is determined based on a size of a measurement window. The size of the measurement window is determined based on a number of CMRs among the at least one measurement resource.

In another aspect of the present disclosure, provided herein is a computer-readable storage medium. The computer-readable storage medium stores at least one computer program including instructions that, when executed by at least one processor, cause the at least one processor to perform operations for a UE. The operations include: receiving a control signal for predicted CSI reporting from a BS; receiving at least one measurement resource from the BS based on the control signal for the predicted CSI reporting; measuring at least one predicted CSI for one or more time instances based on the at least one measurement resource; and transmitting the at least one predicted CSI to the BS. A first minimum time interval from receiving the control signal for the predicted CSI reporting to transmitting the at least one predicted CSI is determined based on a size of a measurement window. The size of the measurement window is determined based on a number of CMRs among the at least one measurement resource.

In each aspect of the present disclosure, the first minimum time interval and a second minimum time interval from receiving all measurement resources configured by the BS for reporting the at least one predicted CSI to transmitting the at least one predicted CSI increase based on a number of the time instances.

In each aspect of the present disclosure, measuring the at least one predicted CSI includes: estimating precoding matrix indices (PMIs) respectively corresponding to the one or more time instances and compressing the estimated PMIs based on a time domain (TD) compression codebook; and obtaining the at least one predicted CSI including the compressed PMIs.

In each aspect of the present disclosure, when the number of the CMRs is two or more, the size of the measurement window is determined based on the number of the CMRs and an interval between the CMRs.

In each aspect of the present disclosure, the control signal for the predicted CSI reporting includes downlink control information (DCI) received on a physical downlink control channel (PDCCH).

The above solutions are only some of the examples of the disclosure, and various examples reflecting the technical features of the disclosure may be derived and understood from the following detailed description by those skilled in the art.

### ADVANTAGEOUS EFFECTS

According to the disclosure, wireless signal transmission and reception may be efficiently performed in a wireless communication system.

It will be appreciated by persons skilled in the art that the technical effects that could be achieved with the disclosure are not limited to what has been particularly described hereinabove and the above and other technical effects that the disclosure could achieve will be more clearly understood from the following detailed description.

### BRIEF DESCRIPTION OF THE DRAWINGS

The accompanying drawings are provided to help understanding of the embodiment, along with a detailed description. However, the technical features of the embodiment are not limited to a specific drawing, and features disclosed in each drawing may be combined with each other to constitute a new embodiment. Reference numerals in each drawing denote structural elements:
FIG. 1 illustrates physical channels used in a 3rd generation partnership project (3GPP) system, which is an example of wireless communication systems, and a general signal transmission method using the same.
FIG. 2 illustrates a radio frame structure.
FIG. 3 illustrates a resource grid of a slot.
FIG. 4 illustrates exemplary mapping of physical channels in a slot;
FIG. 5 illustrates an exemplary process of transmitting a physical downlink shared channel (PDSCH) and an acknowledgment/negative acknowledgment (ACK/NACK).
FIG. 6 illustrates an exemplary physical uplink shared channel (PUSCH) transmission process.
FIG. 7 illustrates an example of a channel state information (CSI) related procedure.
FIG. 8 is a diagram for explaining a concept of artificial intelligence/machine learning (AI/ML)/deep learning.
FIGS. 9 to 12 illustrate various AI/ML models of deep learning.
FIG. 13 is a diagram for explaining a framework for 3GPP radio access network (RAN) intelligence.
FIGS. 14 and 15 illustrate examples of reporting precoding matrix indices (PMIs) for multiple time instances.
FIG. 16 is a flowchart illustrating an example of reporting CSI according to embodiments of the present disclosure.
FIG. 17 to FIG. 20 illustrate a communication system (1) and a wireless device applicable to the disclosure.

### DETAILED DESCRIPTION

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

While the disclosure is described mainly in the context of 3GPP NR for clarity of description, the technical idea of the disclosure is not limited to 3GPP NR.

In the specification, the expression "setting" may be replaced with the expression "configure/configuration", and the two may be used interchangeably. In addition, conditional expressions (e.g., "if ~~", "in a case ~~", "when ~~", or the like) may be replaced with the expression "based on that ~~" or "in a state/status ~~". Further, an operation of a user equipment (UE)/base station (BS) or an SW/HW configuration according to the satisfaction of the condition may be inferred/understood. Further, when a process of a receiving (or transmitting) side may be inferred/understood from a process of the transmitting (or receiving) side in signal transmission/reception between wireless communication devices (e.g., a BS and a UE), its description may be omitted. For example, signal determination/generation/encoding/transmission on the transmitting side may be understood as signal monitoring reception/decoding/determination on the receiving side. In addition, when it is said that a UE performs (or does not perform) a specific operation, this may also be interpreted as meaning that a BS operates expecting/assuming that the UE performs the specific operation (or expecting/assuming that the UE does not perform the specific operation). In addition, when it is said that a BS performs (or does not perform) a specific operation, this may also be interpreted as meaning that a UE operates expecting/assuming that the BS performs the specific operation (or expecting/assuming that the BS does not perform the specific operation). In addition, the identification and index of each section, embodiment, example, option, method, plan, or the like in the following description are for the convenience of description, and should not be interpreted as meaning that each forms an independent disclosure or that each should be implemented individually. In addition, unless there is an explicitly conflicting/opposing description in describing each section, embodiment, example, option, method, plan, or the like, it may be inferred/interpreted as meaning that at least some of them may be implemented together in combination, or they may be implemented with at least some of them omitted.

In a wireless communication system, a UE receives information through downlink (DL) from a BS and transmit information to the BS through uplink (UL). The information transmitted and received by the BS and the UE includes data and various control information and includes various physical channels according to type/usage of the information transmitted and received by the UE and the BS.

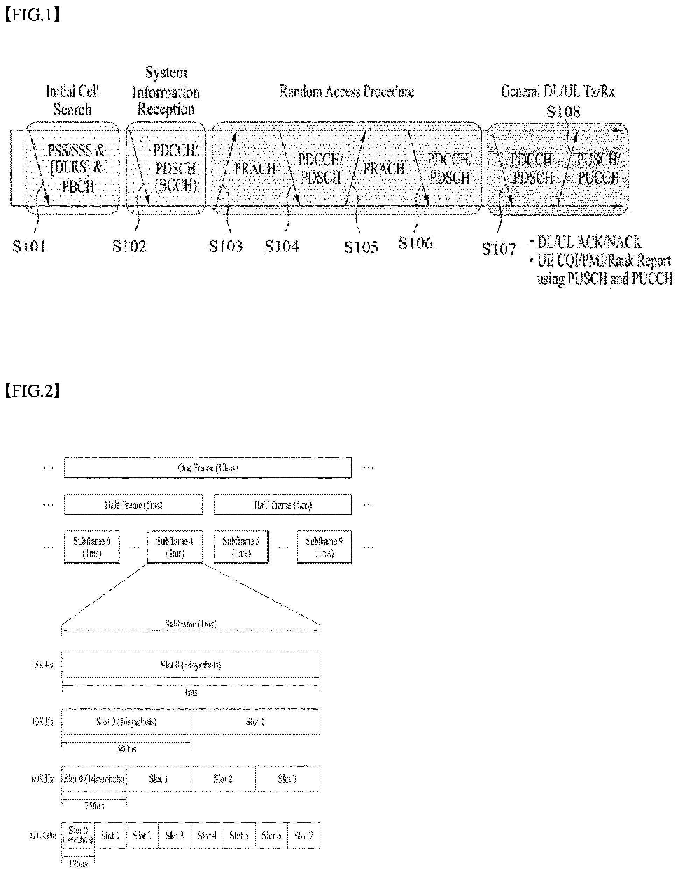

FIG. 1 is a diagram illustrating physical channels and a signal transmission method using the physical channels, in 3GPP NR system.

When powered on or when a UE initially enters a cell, the UE performs initial cell search involving synchronization with a BS in step S101. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S102.

Subsequently, to complete connection to the eNB, the UE may perform a random access procedure with the eNB (S103 to S106). In the random access procedure, the UE may transmit a preamble on a physical random access channel (PRACH) (S103) and may receive a PDCCH and a random access response (RAR) for the preamble on a PDSCH associated with the PDCCH (S104). The UE may transmit a physical uplink shared channel (PUSCH) by using scheduling information in the RAR (S105), and perform a contention resolution procedure including reception of a PDCCH signal and a PDSCH signal corresponding to the PDCCH signal (S106).

After the above procedure, the UE may receive a PDCCH and/or a PDSCH from the eNB (S107) and transmit a Physical Uplink Shared Channel (PUSCH) and/or a Physical Uplink Control Channel (PUCCH) to the eNB (S108), which is a general DL and UL signal transmission procedure. Particularly, the UE receives Downlink Control Information (DCI) on a PDCCH. Control information transmitted from a UE to an eNB is collectively referred to as uplink control information (UCI). The UCI includes a hybrid automatic repeat and request acknowledgement/negative-acknowledgment (HARQ ACK/NACK), a scheduling request (SR), channel state information (CSI), and so on. The CSI includes a channel quality indicator (CQI), a precoding matrix indicator (PMI), a rank indication (RI), and so on. Although the UCI is generally transmitted through a PUCCH, it may be transmitted through a PUSCH, when control information and traffic data should be transmitted simultaneously. In addition, the UCI may be transmitted aperiodically through a PUSCH by a request/indication of the network.

FIG. 2 illustrates the structure of a radio frame. The radio frame may be used for UL transmission and DL transmission in NR. A radio frame is 10 ms in length and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP). In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame *N^{rame,u}ₛₗₒₜ,* and the number of slots per subframe *N^{ubframe,u}ₛₗₒₜ* according to an SCS configuration µ in the NCP case.

**[Table 1]**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2 below lists the number of symbols per slot N^{slot}_{symb}, the number of slots per frame *N^{frame,u}ₛₗₒₜ,* and the number of slots per subframe *N^{subframe,u}ₛₗₒₜ* according to an SCS configuration µ in the ECP case.

**[Table 2]**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

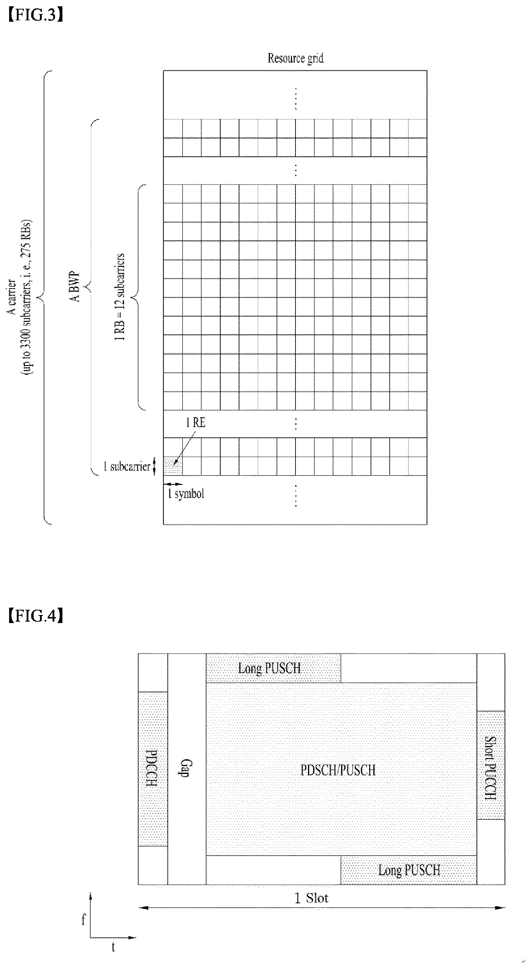

FIG. 3 illustrates an exemplary resource grid for the duration of a slot. A slot includes a plurality of symbols in the time domain. For example, one slot includes 14 symbols in a normal CP case, whereas one slot includes 12 symbols in an extended CP case. A carrier includes a plurality of subcarriers in the frequency domain. A resource block (RB) is defined as a plurality of (e.g., 12) contiguous subcarriers in the frequency domain. A bandwidth part (BWP) may be defined as a plurality of physical RBs (PRBs) in the frequency domain, and correspond to one numerology (e.g., an SCS, a CP length, or the like). A carrier may include up to N (e.g., 5) BWPs. Data communication may be performed in an active BWP, and only one BWP may be activated for one UE. Each element of a resource grid may be referred to as a resource element (RE) and mapped to one complex symbol.

FIG. 4 illustrates an example of mapping physical channels in a slot. A PDCCH may be transmitted in a DL control region, and a PDSCH may be transmitted in a DL data region. A PUCCH may be transmitted in a UL control region, and a PUSCH may be transmitted in a UL data region. A GP provides a time gap for switching from a transmission mode to a reception mode or switching from the reception mode to the transmission mode at the BS and the UE. Some symbols at a DL-to-UL switching time point within a subframe may be configured as a GP.

Each physical channel is described below in more detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to an aggregation level (AL). A CCE is a logical allocation unit used to provide a PDCCH with a specific code rate according to a wireless channel state. A CCE includes six resource element groups (REGs). An REG is defined as one OFDM symbol and one (P)RB. The PDCCH is transmitted in a control resource set (CORESET). A CORESET is defined as an REG set having a given numerology (e.g., an SCS, a CP length, and so on). A plurality of CORESETs for one UE may overlap with each other in the time/frequency domain. The CORESET may be configured by system information (e.g., a master information block (MIB)) or UE-specific higher layer (e.g., radio resource control (RRC) layer) signaling. Specifically, the number of RBs and the number (up to 3) of OFDM symbols included in the CORESET may be configured by higher layer signaling.

For PDCCH reception/detection, the UE monitors PDCCH candidates. A PDCCH candidate represents CCE(s) that the UE should monitor for PDCCH detection. Each PDCCH candidate is defined as 1, 2, 4, 8, or 16 CCEs according to an AL. The monitoring includes (blind) decoding of the PDCCH candidates. A set of PDCCH candidates that the UE monitors are defined as a PDCCH search space (SS). The SS includes a common search space (CSS) or a UE-specific search space (USS). The UE may acquire DCI by monitoring PDCCH candidates in one or more SSs configured by an MIB or higher layer signaling. Each CORESET is associated with one or more SSs, and each SS is associated with one COREST. The SS may be defined based on the following parameters.
- controlResourceSetId: Indicates a CORESET associated with the SS
- monitoringSlotPeriodicityAndOffset: Indicates a PDCCH monitoring periodicity (in slots) and a PDCCH monitoring period offset (in slots)
- monitoringSymbolsWithinSlot: Indicates PDCCH monitoring symbols (e.g., the first symbol(s) of the CORESET) within the slot
- nrofCandidates: AL={1, 2, 4, 8, 16} indicates the number of PDCCH candidates (one of 0, 1, 2, 3, 4, 5, 6, and 8)

* An occasion (e.g., time/frequency resources) in which the PDCCH candidates are to be monitored is defined as a PDCCH (monitoring) occasion. One or more PDCCH (monitoring) occasions may be configured within a slot.

Table 3 illustrates characteristics of each SS type.

**[Table 3]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 4 shows DCI formats transmitted on the PDCCH.

**[Table 4]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., dynamic SFI) to the UE, and DCI format 2_1 may be used to deliver DL pre-emption information to the UE. DCI format 2_0 and/or DCI format 2_1 may be transmitted to UEs within a group through a group common PDCCH, which is a PDCCH delivered to UEs defined as a group.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH carries DL data (e.g., a DL-SCH transport block (DL-SCH TB)), and modulation schemes such as quadrature phase shift keying (QPSK), 16 quadrature amplitude modulation (16 QAM), 64 QAM, 256 QAM, or the like is applied to the PDSCH. A TB is encoded to generate a codeword. The PDSCH may carry up to two codewords. Each codeword may be subject to scrambling and modulation mapping, and modulation symbols generated from the codeword may be mapped to one or more layers. Each layer is mapped to resources along with a demodulation reference signal (DMRS)), generated as an OFDM symbol signal, and transmitted through a corresponding antenna port.

The PUCCH carries UCI. The UCI includes the following.
- SR (Scheduling Request): Information used to request UL-SCH resources
- HARQ(Hybrid Automatic Repeat reQuest)-ACK(Acknowledgement): A response to a DL data packet (e.g., codeword) on a PDSCH. This indicates whether the DL data packet has been successfully received. One HARQ-ACK bit may be transmitted in response to a single codeword, and two HARQ-ACK bits may be transmitted in response to two codewords. The HARQ-ACK response includes a positive ACK (simply, ACK), a negative ACK (NACK), DTX, or NACK/DTX. HARQ-ACK is used interchangeably with HARQ ACK/NACK and ACK/NACK.
- CSI (Channel State Information): Feedback information for a DL channel. Multiple input multiple output (MIMO)-related feedback information includes an RI and a PMI.

Table 5 illustrates an example of PUCCH formats. Depending on PUCCH transmission durations, they may be classified into short PUCCH (Formats 0 and 2) and long PUCCH (Formats 1, 3 and 4).

**[Table 5]**

| PUCC H format | Length in OFDM symbols NPUCCHsym b | Number of bits | Usage | Etc. |
|---|---|---|---|---|
| 0 | 1-2 | ≤2 | HARQ, SR | Sequence selection |
| 1 | 4-14 | ≤2 | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

PUCCH format 0 carries UCI of up to 2 bits, and is mapped to and transmitted based on a sequence. Specifically, the UE transmits one of a plurality of sequences through a PUCCH of PUCCH format 0 to transmit specific UCI to the BS. The UE transmits the PUCCH of PUCCH format 0 in PUCCH resources for a corresponding SR configuration, only when transmitting a positive SR.

PUCCH format 1 carries UCI of up to 2 bits, and modulation symbols are spread with an orthogonal cover code (OCC) (which is configured differently depending on whether frequency hopping is performed) in the time domain. A DMRS is transmitted in a symbol which does not carry modulation symbols (i.e., transmitted in time division multiplexing (TDM)).

PUCCH format 2 carries UCI of more than two bits, and modulation symbols are transmitted with a DMRS in frequency division multiplexing (FDM). The DMRS is located in symbol indexes #1, #4, #7 and #10 within a given RB with a density of 1/3. A pseudo noise (PN) sequence is used for a DMRS sequence. Frequency hopping may be activated for 2-symbol PUCCH format 2.

In PUCCH format 3, UEs are not multiplexed within the same PRB, and UCI with more than two bits is delivered. In other words, PUCCH resources of PUCCH format 3 do not include an OCC. A modulation symbol is transmitted with a DMRS in TDM.

PUCCH format 4 supports multiplexing of up to four UEs within the same physical RS and carries UCI with more than two bits. In other words, PUCCH resources of PUCCH format 3 include an OCC. A modulation symbol is transmitted with a DMRS in TDM.

At least one of one or more cells configured for the UE may be configured for PUCCH transmission. At least a primary cell may be configured as a cell for the PUCCH transmission. At least one PUCCH cell group may be configured for the UE based on the at least one cell configured for the PUCCH transmission, and each PUCCH cell group includes one or more cells. A PUCCH cell group may be simply referred to as a PUCCH group. The PUCCH transmission may be configured not only for the primary cell but also for an SCell, and the primary cell belongs to a primary PUCCH group, while the PUCCH-SCell configured for the PUCCH transmission belongs to a secondary PUCCH group. A PUCCH on the primary cell may be used for cells belonging to the primary PUCCH group, and a PUCCH on the PUCCH-SCell may be used for cells belonging to the secondary PUCCH group.

The PUSCH carries UL data (e.g., a UL-SCH TB) and/or UCI, and is transmitted based on a cyclic prefix-orthogonal frequency division multiplexing (CP-OFDM) waveform or a discrete Fourier transform-spread-orthogonal frequency division multiplexing (DFT-s-OFDM) waveform. When the PUSCH is transmitted based on the DFT-s-OFDM waveform, the UE transmits the PUSCH by applying transform precoding. For example, when transform precoding is impossible (e.g., transform precoding is disabled), the UE may transmit the PUSCH based on the CP-OFDM waveform, and when transform precoding is possible (e.g., transform precoding is enabled), the UE may transmit the PUSCH based on the CP-OFDM waveform or the DFT-s-OFDM waveform. PUSCH transmission may be dynamically scheduled by a UL grant in DCI or semi-statically scheduled based on higher layer (e.g. RRC) signaling (and/or layer 1 (L1) signaling (e.g. a PDCCH)). PUSCH transmission may be performed in a codebook-based or non-codebook-based manner.

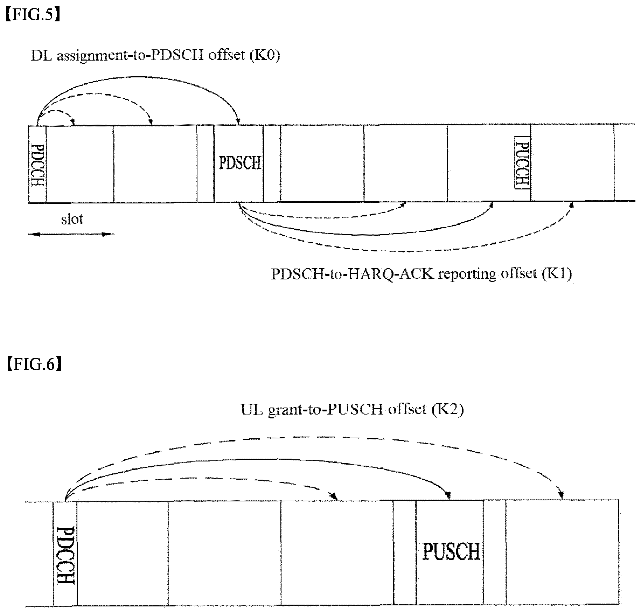

FIG. 5 illustrates an ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 or DCI format 1_1 may include the following information.
- Frequency domain resource assignment: Indicates an RB set assigned to a PDSCH.
- Time domain resource assignment: Indicates K0 (e.g., a slot offset), the starting position (e.g., OFDM symbol index) of a PDSCH in slot #n+K0, and the length (e.g., the number of OFDM symbols) of the PDSCH
- PDSCH-to-HARQ_feedback timing indicator: Indicates K1.
- HARQ process number (4 bits): Indicates HARQ process identify (ID) for data (e.g., PDSCH or TB)
- PUCCH resource indicator (PRI): Indicates a PUCCH resource to be used for UCI transmission among a plurality of PUCCH resources in a PUCCH resource set

Subsequently, the UE may receive a PDSCH from slot #(n+K0) according to scheduling information in slot #n. Upon completion of the PDSCH reception in slot #n1 (where n+K0≤ n1), the UE may transmit UCI through a PUCCH in slot #(n1+K1). The UCI may include a HARQ-ACK response to the PDSCH. In FIG. 5, it is assumed for convenience that an SCS for the PDSCH and an SCS for the PUCCH are the same and slot# n1 = slot# n+K0, to which the disclosure is not limited. When the SCSs are different, K1 may be indicated/interpreted based on the SCS of the PUCCH.

When the PDSCH is configured to transmit up to one TB, the HARQ-ACK response may include one bit. When the PDSCH is configured to transmit up to two TBs, the HARQ-ACK response may include two bits in the case of not configuring spatial bundling, and include one bit in the case of configuring spatial bundling. When a HARQ-ACK transmission time for a plurality of PDSCHs is specified as slot #(n+K1), the UCI transmitted in slot #(n+K1) includes HARQ-ACK responses for the plurality of PDSCHs.

Whether the UE should perform spatial bundling for a HARQ-ACK response may be configured (e.g., by RRC/higher layer signaling) for each cell group. For example, spatial bundling may be individually configured for each HARQ-ACK response transmitted through a PUCCH and/or each HARQ-ACK response transmitted through a PUSCH.

When the maximum number of TBs (or codewords) receivable at one time (or schedulable by one DCI) in a corresponding serving cell is 2 (or larger) (e.g., when a higher layer parameter maxNrofCodeWordsScheduledByDCI corresponds to 2 TBs), spatial bundling may be supported. Meanwhile, more than 4 layers may be used for 2-TB transmission, and up to 4 layers may be used for 1-TB transmission. Consequently, when spatial bundling is configured for a corresponding cell group, spatial bundling may be performed for a serving cell for which more than 4 layers are schedulable among the serving cells of the cell group. On the serving cell, the UE that wants to transmit a HARQ-ACK response through spatial bundling may generate the HARQ-ACK response by performing a bitwise logical AND operation on A/N bits for a plurality of TBs.

For example, on the assumption that the UE receives DCI scheduling two TBs and receives the two TBs through a PDSCH based on the DCI, the UE performing spatial bundling may generate a single A/N bit by performing a logical AND operation on a first A/N bit for a first TB and a second A/N bit for a second TB. As a result, when both the first TB and the second TB are ACKs, the UE reports an ACK bit value to the BS, and when any one of the TBs is a NACK, the UE reports a NACK bit value to the BS.

For example, when only one TB is actually scheduled in a serving cell configured to receive two TBs, the UE may generate a single A/N bit by performing a logical AND operation on an A/N bit for the one TB and a bit value of 1. As a result, the UE reports the A/N bit for the one TB to the BS as it is.

There are a plurality of parallel DL HARQ processes for DL transmission in the BS/UE. The plurality of parallel HARQ processes allow DL transmission to be performed continuously while the BS waits for a HARQ feedback to successful or unsuccessful reception of a previous DL transmission. Each HARQ process is associated with a HARQ buffer of a medium access control (MAC) layer. Each DL HARQ process manages state variables such as the number of transmissions of a MAC physical data block (PDU) in a buffer, a HARQ feedback for the MAC PDU in the buffer, and a current redundancy version. Each HARQ process is identified by a HARQ process ID.

FIG. 6 illustrates an exemplary PUSCH transmission process. Referring to FIG. 6, the UE may detect a PDCCH in slot #n. The PDCCH may include UL scheduling information (e.g., DCI format 0_0 or DCI format 0_1). DCI format 0_0 and DCI format 0_1 may include the following information.
- Frequency domain resource assignment: Indicates an RB set allocated to a PUSCH.
- Time domain resource assignment: Specifies a slot offset K2 indicating the starting position (e.g., symbol index) and length (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

### CSI related operation

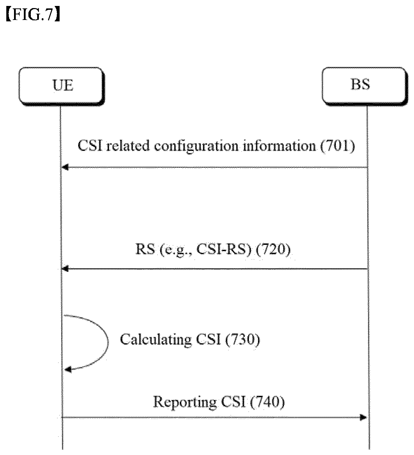

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.
- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.
- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).
- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.
- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.
- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a MAC CE indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

### QCL (quasi-co location)

When the channel properties of an antenna port may be derived from a channel of another antenna port, the two antenna ports are quasi co-located. The channel properties may include one or more of delay spread, Doppler spread, frequency/Doppler shift, average received power, received timing/average delay, and spatial RX parameter.

The UE may be configured with a list of a plurality of TCI-State configurations through a higher layer parameter, PDSCH-Config. Each TCI-State is associated with a QCL configuration parameter between one or two DL RSs and a DMRS port of a PDSCH. QCL may include qcl-Type1 for a first DS RS and qcl-Type2 for a second DL RS. A QCL type may correspond to one of the following types.
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

### Beam Management (BM)

BM is a series of processes for acquiring and maintaining a set of BS (or transmission and reception point (TRP)) beams and/or UE beams available for DL and UL transmissions/receptions. BM may include the following processes and terminology.
- Beam measurement: The BS or the UE measures the characteristics of a received beamformed signal.
- Beam determination: The BS or the UE selects its transmission (Tx) beam/reception (Rx) beam.
- Beam sweeping: A spatial domain is covered by using Tx beams and/or Rx beams in a predetermined manner during a predetermined time interval.
- Beam report: The UE reports information about a beamformed signal based on a beam measurement.

The BM process may be divided into (1) a DL BM process using an SSB or a CSI-RS and (2) a UL BM process using a sounding reference signal (SRS). Further, each BM process may include Tx beam sweeping for determining a Tx beam and Rx beam sweeping for determining an Rx beam.

The DL BM process may include (1) transmission of a beamformed DL RS (e.g., a CSI-RS or SSB) from the BS, and (2) beam reporting from the UE.

The beam report may include preferred DL RS ID(s) and reference signal received power (RSRP) corresponding to the DL RS ID(s). A DL RS ID may be an SSB resource indicator (SSBRI) or a CSI-RS resource indicator (CRI).

### M-TRP (multi-transmission and reception point) transmission

NR Release 17 supports M-TRP PDCCH repeated transmission, M-TRP PDCCH/PDSCH SFN transmission, S-DCI-based M-TRP PUSCH repeated transmission, and single PUCCH resource-based M-TRP PUCCH repeated transmission.

In all of these transmission techniques, the same content (i.e., DCI, a UL TB, or UCI) is repeatedly transmitted with URLLC target enhancement for increased reliability. Repeated transmissions are performed in TDM or FDM in the case of M-TRP PDCCH repeated transmission, repeated transmissions are performed in the same time/frequency/layer in the case of M-TRP PDCCH/PDSCH SFN transmission, repeated transmissions are performed in TDM in the case of S-DCI-based M-TRP PUSCH repeated transmission, and repeated transmissions are performed in TDM in the case of single PUCCH resource-based M-TRP PUCCH repeated transmission.

### - S-DCI-based M-TRP PDCCH repeated transmission

In NR Release 17, for M-TRP PDCCH repeated transmission, a plurality of CORESETs configured with different TCI states (i.e., different QCL RSs) are configured for the UE, and a plurality of SS sets connected to the CORESETs, respectively are configured. The BS indicates/configures linkage between an SS set connected to one CORESET and an SS set connected to another CORESET, for repeated transmission, to/for the UE, so that the UE may be aware that PDCCH candidates of the SS sets are repeatedly transmitted.

For example, two CORESETs, CORESET #0 and CORESET #1 may be configured for the UE and connected to SS sets #0 and #1, respectively, and SS set #0 and SS set #1 may be linked. The UE may be aware that the same DCI is repeatedly transmitted on a PDCCH candidate of SS set #0 and a PDCCH candidate of SS set #1, and through a specific rule, that the specific PDCCH candidate of SS set #0 and the specific PDCCH candidate of SS set #1 are a pair configured for repeated transmission of the same DCI. These two PDCCH candidates are referred to as linked PDCCH candidates, and when the UE successfully receives either of the two PDCCH candidates, the UE may successfully decode the DCI. However, when receiving the PDCCH candidate of SS set #0, the UE uses a QCL RS (i.e., DL beam) of the TCI state of CORESET #0 connected to SS set #0, and when receiving the PDCCH candidate of SS set #1, it uses a QCL RS (i.e., DL beam) of the TCI state of CORESET #1 connected to SS set #1, so that the UE receives the linked PDCCH candidates with different beams.

### - M-TRP SFN PDCCH

As a special case of M-TRP PDCCH repeated transmission, multiple TRPs may repeatedly transmit the same DCI through the same time/frequency/DM-RS port, which may be called SFN PDCCH transmission. However, for SFN PDCCH transmission, the BS configures a plurality of TCI states for one CORESET rather than a plurality of CORESETs with different TCI states. When the UE receives a PDCCH candidate in an SS set connected to the one CORESET, it performs channel estimation on a PDCCH DM-RS and attempts to decode the PDCCH DM-RS using all of the plurality of TCI states.

### - M-TRP SFN PDSCH

In the above M-TRP PDSCH repeated transmission, the two TRPs repeatedly transmit the corresponding channel in different resources. In a special case, however, when the two TRPs use the same resource, that is, even when the same channel is repeatedly transmitted in the same frequency, time, and layer (or DM-RS port), the reliability of the channel may be improved. In this case, the same channels that are repeatedly transmitted are combined on the air and received because their resources are not distinguished. Therefore, they are recognized as one channel from the receiver's perspective. In the NR standard, for PDSCH SFN transmission, two DL TCI states may be configured for PDSCH DM-RS reception.

### - S-DCI-based M-TRP PUSCH repeated transmission

For S-DCI-based M-TRP PUSCH transmission, the BS configures two SRS sets for the UE, and the SRS sets are used to indicate UL transmission ports and UL beam/QCL information for TRP #1 and TRP #2, respectively. In addition, the BS may indicate SRS resources for the respective SRS sets by two SRI fields in one DCI, and indicate up to two power control (PC) parameter sets. For example, a first SRI field may indicate SRS resources and a PC parameter set defined for set 0, and a second SRI field may indicate SRS resources and a PC parameter set defined for set 1.

The UE receives the indication of a UL Tx port, a PC parameter set, and UL beam/QCL information for TRP #1 through the first SRI field, and performs PUSCH transmission in a TO corresponding to SRS set #0. Similarly, the UE receives the indication of a UL Tx port, a PC parameter set, and UL beam/QCL information for TRP #2 through the second SRI field, and performs PUSCH transmission in a TO corresponding to SRS set #1.

### - M-TRP PUCCH repeated transmission based on single PUCCH resource

For M-TRP PUCCH transmission based on a single PUCCH resource, the BS activates/configures two spatial relation infos for the single PUCCH resource, for the UE, and when the UE transmits UCI in the PUCCH resource, the spatial relation infos are used to indicate spatial relation information for TRP #1 and TRP #2, respectively.

For example, the UE receives an indication of a Tx beam/PC parameter for TRP #1 through a value indicated by a first spatial relation info, and performs PUCCH transmission in a TO corresponding to TRP #1 using this information. Similarly, the UE receives an indication of a Tx beam/PC parameter for TRP #2 through a value indicated by a second spatial relation info, and performs PUCCH transmission in a TO corresponding to TRP #2 using this information.

In the Rel 17 standardization meeting, a configuration method was enhanced so that two spatial relation infos may be configured for a PUCCH resource, for M-TRP PUCCH repeated transmission. That is, when a PC parameter is set in each spatial relation info, a spatial relation RS may be configured. As a result, PC information and spatial relation RS information corresponding to two TRPs may be configured through the two spatial relation infos, and the UE transmits UCI in TO 1 through a PUCCH using the first spatial relation info, and transmits the same UCI (i.e., CSI, ACKNAK, SR) in TO 2 through the PUCCH using the second spatial relation info.

Hereinafter, a PUCCH resource configured with two spatial relation infos is referred to as an M-TRP PUCCH resource, and a PUCCH resource configured with one spatial relation info is referred to as an S-TRP PUCCH resource.

### Meaning of TCI state/beam indication

Using or mapping a specific TCI state (or TCI) when data/DCI/UCI is received in a certain frequency/time/spatial resource may mean that in DL, a channel is estimated from a DM-RS in the frequency/time/spatial resource, using a QCL type and QCL RS indicated by the DL TCI state, and data/DCI is received/demodulated based on the estimated channel.

In UL, it may mean that a DM-RS and data/UCI are transmitted/modulated in the frequency/time/spatial resource using a Tx beam and/or Tx power indicated by the UL TCI state.

A UL TCI state includes information about a Tx beam or Tx power for the UE, and the information may be configured for the UE by other parameters such as a spatial relation info, instead of the TCI state.

The UL TCI state may be directly indicated by DCI carrying a UL grant, or may mean a spatial relation info for an SRS resource indicated by an SRI field in the UL grant DCI. Alternatively, it may mean an open-loop Tx power control parameter linked to the value indicated by the SRI field in the UL grant DCI. Alternatively, a UL TCI may be indicated by the DL grant DCI.

### Artificial intelligence/machine learning (AI/ML)

With the technological development of AI/ML, node(s) and UE(s) constituting a wireless communication network are becoming intelligent/advanced, and in particular, due to intelligence of a network/BS, it is expected that various network/BS determination parameter values (e.g., transmission and reception power of each BS, transmission power of each UE, precoder/beam of BS/UE, time/frequency resource allocation for each UE, or a duplex method of BS) are rapidly optimized and derived/applied according to various environmental parameters (e.g., distribution/location of BSs, distribution/location/material of building/furniture, location/moving direction/speed of UEs, and climate information). In line with this trend, many standardization organizations (e.g., 3GPP or O-RAN) consider introduction of the network/BS determination parameter values, and research on this is also actively underway.

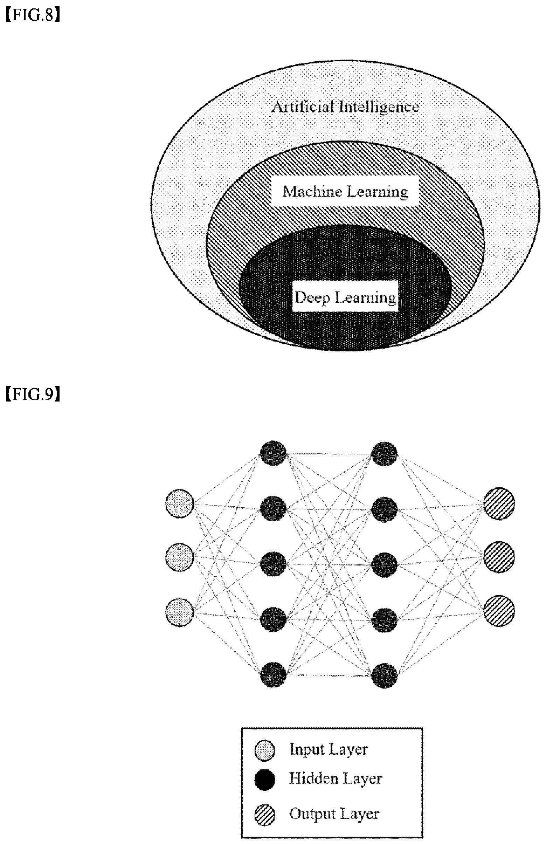

In a narrow sense, AI/ML may be easily referred to as deep learning-based artificial intelligence, but is conceptually shown in FIG. 8.
- Artificial intelligence: This may correspond to all automation by which machines replace a human work.
- Machine learning: Without explicitly programming rules, machines may learn patterns for decision-making on their own from data.
- Deep learning: This is an artificial neural network-based AI/ML model in which a machine performs all at once from unstructured data to feature extraction and determination and an algorithm depends upon a biological nervous system, that is, a multi-layer network of interconnected nodes for feature extraction and transformation inspired by a neural network. A common deep learning network architecture may include deep neural networks (DNNs), recurrent neural networks (RNNs) and convolutional neural networks (CNNs).

### Classification of types of AI/ML according to various references

### 1. Offline vs Online

(1) Offline Learning: Offline Learning follows a sequential procedure of data collection, training, and prediction. In other words, collection and training are performed offline, and a completed program is installed on-site for use in prediction tasks. The offline learning approach is used in most situations.
(2) Online Learning: Online learning refers to a method that incrementally learns with newly generated data to gradually improve performance based on continuous generation of data available for learning through the Internet

### 2. Classification according to AI/ML Framework concept

(1) Centralized Learning: When training data collected from a plurality of different nodes is reported to a centralized node, all data resources/storage/learning (e.g., supervised, unsupervised, and reinforcement learning) are performed by one central node.
(2) Federated Learning: A collective AI/ML model is configured based on data across decentralized data owners. Instead of using data into an AI/ML model, a local node/individual device collects data and a train a copy of the AI/ML model thereof, and thus it is not required to report source data to a central node. In federated learning, a parameter/weight of the AI/ML model may be transmitted back to the centralized node to support general AI/ML model training. An advantage of federated learning includes increased computation speed and superiority in terms of information security. That is, a process of uploading personal data to a central server is unnecessary, and leakage and abuse of personal information may be prevented.
(3) Distributed Learning: The machine learning process represents a concept that is scaled and deployed across a cluster of nodes. A training AI/ML model is split and shared across multiple nodes operating concurrently to speed up AI/ML model training.

### 3. Classification according to learning method

(1) Supervised Learning: Supervised learning is a machine learning task that aims to learn a mapping function from input to output when a labeled data set is given. The input data is called training data and has known labels or outcomes. An example of the supervised learning may include (i) Regression: Linear Regression, Logistic Regression, (ii) Instance-based Algorithms: k-Nearest Neighbor (KNN), (iii) Decision Tree Algorithms: CART, (iv) Support Vector Machines: SVM, (v) Bayesian Algorithms: Naive Bayes, and (vi) Ensemble Algorithms: Extreme Gradient Boosting, Bagging: Random Forest. The supervised learning may be further grouped due to regression and classification problems, and classification predicts a label and regression predicts a quantity.
(2) Unsupervised Learning: This is a machine learning task that aims to learn a function that describes a hidden structure in unlabeled data. Input data is unlabeled and has no known results. Some examples of unsupervised learning include K-means clustering, principal component analysis (PCA), nonlinear independent component analysis (ICA), and LSTM.
(3) Reinforcement Learning: In reinforcement learning (RL), an agent aims to optimize a long-term goal by interacting with an environment based on a trial-and-error process, which is goal-oriented learning based on an interaction with the environment. Examples of an RL algorithm may include (i) Q-learning, (ii) Multi-armed bandit learning, (iii) Deep Q Network, State-Action-Reward-State-Action (SARSA), (iv) Temporal Difference Learning, (v) Actor-critic reinforcement learning, (vi) Deep deterministic policy gradient, and (vii) Monte-Carlo tree search. The RL may be further grouped into AI/ML model-based RL and AI/ML model-free RL. Model-based RL is an RL algorithm that uses a predictive AI/ML model to obtain transition probabilities between states using various dynamic states of the environment and an AI/ML model in which these states lead to rewards. Model-free RL is a value- or policy-based RL algorithm that achieves maximum future reward, which is less computationally complex in multi-agent environments/states and does not require accurate representation of the environment. The RL algorithm may also be classified into value-based RL versus policy-based RL, policy-based RL versus non-policy RL, and the like.

### AI/ML models

FIG. 9 shows an example of a feed-forward neural network (FFNN) AI/ML model. Referring to FIG. 9, the FFNN AI/ML model includes an input layer, a hidden layer, and an output layer.

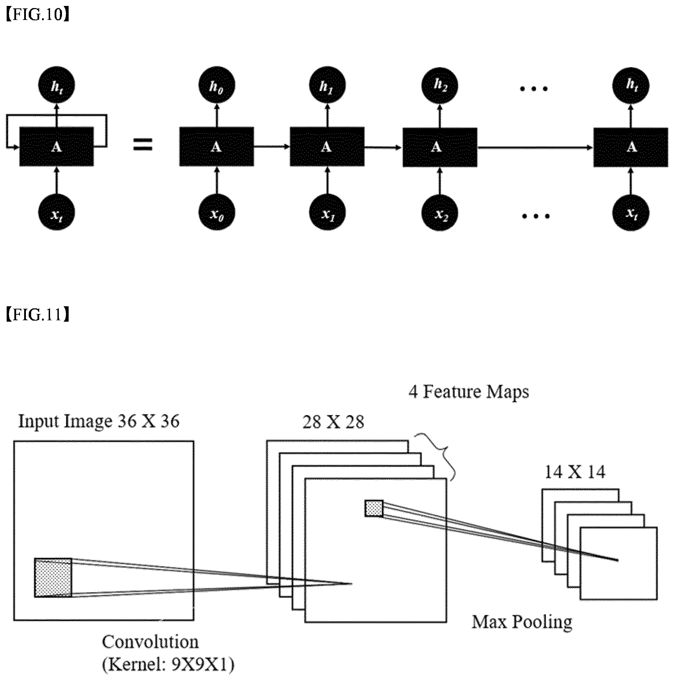

FIG. 10 illustrates a recurrent neural network (RNN) AI/ML model. Referring to FIG. 10, the RNN AI/ML model is a type of artificial neural network with a directed cycle, where hidden nodes are connected by directed edges, which is suitable for processing sequential data such as speech and text. One type of RNN is a long short-term memory (LSTM), which adds a cell state to the hidden state of the RNN. Specifically, in the LSTM, input gates, forget gates, and output gates are added to an RNN cell, along with a cell state.

FIG. 11 illustrates a convolutional neural network (CNN) AI/ML model. A CNN applies convolution operations, commonly used in image or video processing, to achieve two purposes: reducing the complexity of AI/ML models and extracting valuable features. Referring to FIG. 11, a kernel (or filter) refers to a unit/structure that applies weights to a specific range/unit of input. A stride refers to the movement range of a kernel within an input. A feature map refers to the result of applying a kernel to an input. Padding refers to a value added to adjust the size of a feature map. Pooling refers to an operation (e.g., max pooling, average pooling) used to downsample a feature map to reduce the size of the feature map.

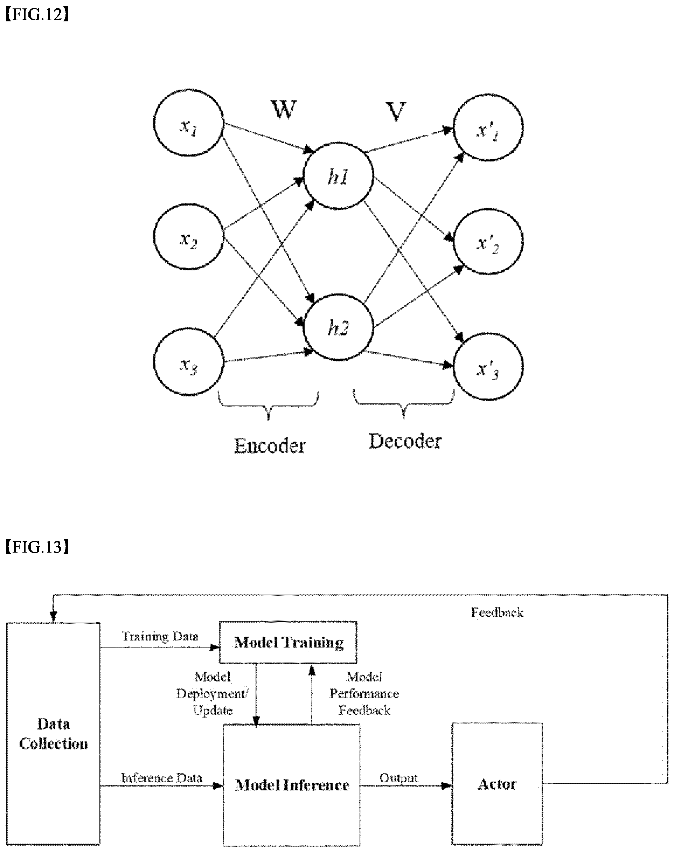

FIG. 12 illustrates an autoencoder AI/ML model. Referring to FIG. 12, an autoencoder is a neural network that receives a feature vector x as an input and outputs the same vector or a similar vector x'. The autoencoder has the characteristic that input and output nodes are the same and is a type of unsupervised learning.

FIG. 13 is a diagram for explaining a framework for 3GPP radio access network (RAN) intelligence.

The following terms related to AI/ML can be defined (refer to 3GPP TS37.817):
- Data Collection: Data collection refers to data gathered from network nodes, management entities, or UEs, which serves as the foundation for AI/ML model training, data analysis, and inference.
- ML Model: An ML model is a data-driven algorithm that generates a set of outputs consisting of predicted information based on a set of inputs by applying ML techniques.
- ML Training: ML training is an online or offline process of training an AI/ML model by learning features and patterns that best represent data and obtaining the trained AI/ML model for inference.
- ML Inference: ML Inference is a process of using a trained AI/ML model to make predictions or guide decisions based on collected data and the AI/ML model.

Referring to FIG. 13, data collection is a function that provides input data for AI/ML model training and inference. Data preparation for each AI/ML algorithm (e.g., data preprocessing, cleaning, formatting, and transformation) is not performed in the data collection function.

Examples of input data may include measurements from a UE or other network entities, feedback from actors, and outputs of an AI/ML model. Training data refers to input data required for the AI/ML model training function. Inference data is input data required for the AI/ML model inference function.

AI/ML model training is a function that performs training, validation, and testing of AI/ML models as part of an AI/ML model testing procedure and generates performance metrics for the AI/ML models. If necessary, he AI/ML model training function may handle data preparation (e.g., data pre-processing, cleaning, forming, and transformation) based on the training data provided by the data collection function.

AI/ML model deployment/update: AI/ML model deployment/update is used to initially deploy a trained, validated, and tested AI/ML model to the AI/ML model inference function or to provide an updated AI/ML model to the AI/ML model inference function.

Model inference is a function that provides AI/ML model inference outputs (e.g., predictions or decisions). In some cases, the AI/ML model inference function may provide performance feedback to the AI/ML model training function. If necessary, the AI/ML model inference function may also perform data preparation (e.g., data preprocessing, cleaning, formatting, and transformation) based on the inference data provided by the data collection function. An output refers to the inference output of the AI model generated by the AI/ML model inference function. AI/ML model performance feedback may be used to monitor the performance of the AI/ML model.

An actor is a function that receives the output of the AI/ML model inference function and triggers or performs related operations. The actor may trigger tasks directed toward other entities or the actor itself. Feedback refers to information that may be necessary to derive training data, inference data, or performance feedback.

### Data set

Data used in AI/ML may include at least one of the following: AI/ML model training data, validation data, or test data.

AI/ML model training data refers to a dataset used for training an AI/ML model.

Validation data is a dataset used to validate an AI/ML model after training is complete. The validation data may be used to prevent overfitting of the AI/ML model training dataset. The validation data may also serve as a dataset for selecting the best model among various AI/ML models trained during the training process. Thus, the validation data may also be considered a type of learning.

Test data is a dataset used for final evaluation and may be independent of training.

For example, AI/ML model training data and validation data may be used in a ratio of approximately 8:2 or 7:3. If test data is also considered, a ratio of 6:2:2 (training: validation: test) may be used.

### Collaboration level

For example, collaboration levels may be defined as follows, depending on the capability of the AI/ML functions between the BS and UE. Modifications through combinations or separations of the following levels may also be possible.

Cat 0a) No collaboration framework: An AI/ML algorithm is implemented but does not require changes to a wireless interface.

Cat 0b) A modified wireless interface is provided to implement a more efficient AI/ML algorithm.

Cat 1) Collaboration between nodes is possible to improve the AI/ML algorithm of each node. The UE may receive assistance from the BS or provide assistance to the BS for training, adaptation, etc. However, the exchange of AI/ML model information between network nodes is not required.

Cat 2) As a joint AI/ML operation between the UE and BS, indications/exchanges between network nodes are required.

### Time Domain (TD) Compression Codebook

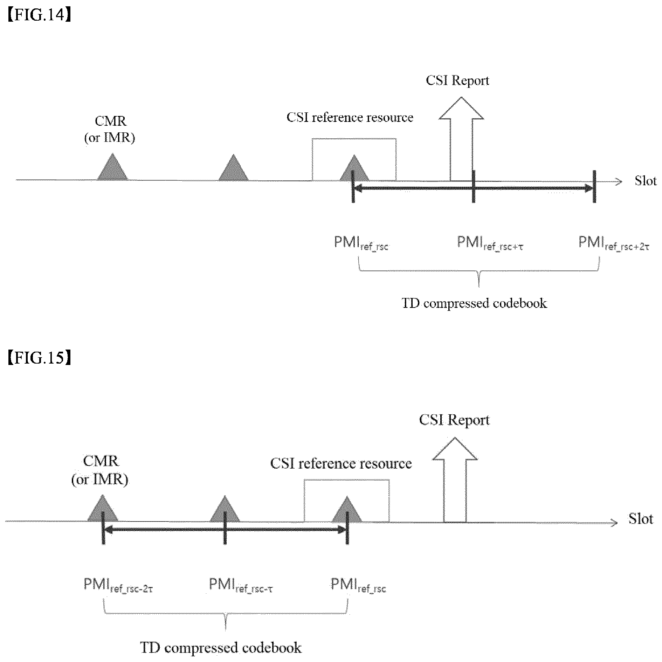

FIGS. 14 and 15 illustrate examples of reporting precoding matrix indices (PMIs) for multiple time instances.

In particular, PMI_{ref_rsc}, PMI_{ref_rsc+τ} and PMI_{ref_rsc+2τ} shown in FIGS. 14 and 15 are compressed based on a TD compression codebook to reduce PMI feedback overhead.

To determine the time instances of a channel represented by a PMI, the BS may perform the following signaling to the UE as shown in FIGS. 14 and 15. For example, the signaling may be provided as parameters for a codebook configuration through RRC signaling.

First, the number of time instances to be represented by the PMI is indicated. In the examples of FIGS. 14 and 15, the number of time instances is 3. The number of time instances may be configured in consideration of the time variability of the channel. To this end, the UE may report information on the speed thereof, Doppler information (Doppler shift/spread), etc., to the BS. Alternatively, the UE may report a preferred number of time instances to the BS based on the speed thereof or Doppler information, and the BS may confirm or make the final selection. The UE may report candidate values for the number of time instances as a UE capability.

Additionally, the value of τ, which represents an interval between time instances, may be indicated as shown in FIGS. 14 and 15. The τ value may be configured considering the time variability of the channel, and for this purpose, the UE may report information on the speed thereof, Doppler information (Doppler shift/spread), etc., to the BS. Alternatively, the UE may report a preferred value of τ to the BS based on the speed thereof or Doppler information, and the BS may confirm or make the final selection. The τ value may be expressed as an absolute time, slots, OFDM symbols, etc. The UE may report candidate values for the τ value as a UE capability.

A CSI reference resource may be used to indicate which time instance among the configured time instances the corresponding time instance corresponds to.

In FIG. 14, a CSI reference resource is configured on the first time instance among three time instances. To this end, the BS may configure a time instance offset for the CSI reference resource to 0. Since the CSI reference resource is configured on the first time instance, the remaining time instances after the first time instance are configured behind the CSI reference resource. In FIG. 15, a CSI reference resource is configured on the last (third) time instance among three time instances. To this end, the BS may configure a time instance offset for the CSI reference resource to 2. Since the CSI reference resource is configured on the third time instance, the remaining time instances before the last (third) time instance are configured prior to the CSI reference resource.

The time instance offset may be configured considering the time variability of the channel, and for this purpose, the UE may report information on the speed thereof, Doppler information (Doppler shift/spread), etc., to the BS. Alternatively, the UE may report a preferred time instance offset to the BS based on the speed thereof or Doppler information, and the BS may confirm or make the final selection. Additionally, depending on the UE implementation, UEs are classified into two types: a UE capable of configuring the time instance offset on time instances other than the last time instance as shown in FIG. 14; and a UE capable of configuring the time instance offset may only on the last time instance as shown in FIG. 15, which may be reported as a UE capability. The latter is simpler to implement because no channel prediction is required, while the former is more complex because channel prediction is required..

More specifically, in the case of the former, the minimum value of a configurable time instance offset or candidates for the configurable time instance offset may be additionally reported. The smaller the minimum value, the more channel prediction needs to be performed, which increases the complexity of the UE implementation.

### CSI Processing Unit (CPU) Count Method for CSI Calculation

In 3GPP NR Release 18 MIMO, the UE performs channel measurement for a burst CSI-RS transmitted over multiple time intervals and calculates/reports CSI for multiple time instances. In this case, CSI may be reported as a single codebook/PMI based on a time-domain/Doppler-domain (TD/DD) compression codebook, i.e., using a Type II codebook, or W2 may be reported individually for each time instance without TD/DD compression. For a single time instance, i.e., a CSI reference resource slot, such CSI demands significantly higher complexity in terms of channel measurement and CSI calculation, compared to existing CSI.

Therefore, the present disclosure proposes a method of adjusting a value related to a CPU or processing time for CSI by reflecting high computational complexity when the CSI is configured to be reported for multiple time instances.

According to the existing NR standard, a single CSI-RS resource used for channel measurement occupies one CPU. However, when CSI-RS resources are configured as a burst in the time domain and when channel measurement is performed for a CSI-RS to calculate CSI for multiple time instances, it is proposed not to count the CSI-RS as one CPU but as a value greater than one (e.g., two or more).

### 1) CPU Count Method #1

As a specific embodiment of increasing the number of CPUs, CPUs may be occupied (or used) for the number of multiple time instances (e.g., N). For example, if CSI is calculated/reported for three time instances, three CPUs are used for the CSI, and similarly, three CPUs are used for a CSI-RS used for channel measurement for the CSI.

When TD/DD compression is used, the number of time instances is equal to the length of a TD/DD basis vector. In contrast, when multiple W2s are reported without TD/DD compression, the number of time instances is equal to the number of W2s.

The above method may be expanded as follows. If multiple CMRs (e.g., M) are configured for CSI, it is proposed to use N*M CPUs. However, if an excessive number of CPUs are allocated, the efficiency of use of CPU resources may decrease. Therefore, instead of using N*M CPUs, M + N CPUs may be used.

Specifically, the UE selects a CRI for M CMRs in the same way as in the prior art (i.e., by selecting the CRI based on CSI for an existing CSI reference resource without considering multiple time instances). In this case, M CPUs are used, and based on the selected CRI, CSI for multiple time instances is calculated. In this process, N CPUs are used. In the process of calculating the CSI for multiple time instances based on the selected CRI, CSI for one time instance (e.g., CSI for the CSI reference resource) is already calculated during the CRI selection process (i.e., the process of using M CPUs). Therefore, the number of CPUs may be optimized to M+N-1 instead of M+N.

To further reduce the number of CPUs, a method of counting the number of CPUs as 1+N may also be considered. That is, during the process of selecting a CSI-RS as the CRI, the UE selects one CSI-RS based on a simple metric such as the RSRP of the CSI-RS. In this process, one CPU is used, and subsequently, N CPUs are used for the selected CSI-RS. Considering that these two processes are connected as a serial process, the number of CPUs may be calculated as min(1, N), or simply N because N is always greater than or equal to 1.

Similarly, instead of calculating the number of CPUs as M+N, the number of CPUs may be calculated as min(N, M). Alternatively, in a simpler way, when reporting CSI for multiple time instances, the UE does not expect that the BS will configure the UE to report a CRI for the CSI together with the CSI. As a result, when the BS configures CSI reporting for multiple time instances, the BS does not configure the UE to report the CRI for the CSI together with the CSI.

### 2) CPU Count Method #2

As another method, if the number of multiple time instances (e.g., N) is 2 or more, 1+alpha CPUs may be occupied (or used). For example, when CSI is calculated/reported for three time instances, two CPUs (e.g., alpha=1) are used for the CSI. Similarly, two CPUs are used for a CSI-RS used for channel measurement for the CSI.

Alpha may vary depending on the number of multiple time instances. For example, alpha may be set to 1 when 1<N<5 and to 2 when 4<N<10. The value of alpha depending on N may be reported by the UE to the BS (e.g., as a UE capability).

The above method may be expanded as follows. It may be applied when multiple CMRs (e.g., M) are configured for CSI. Specifically, N in CPU Count Method #1 may be replaced with 1+alpha.

### 3) CPU Count Method #3

As another method, a specific embodiment of increasing the number of CPUs involves occupying (or using) more CPUs as the time interval between time instances (e.g., τ or TD unit) increases. The wider the time interval, the more complex the UE implementation becomes because it needs to predict CSI for a farther future. For example, when the value of τ is two slots, more CPUs are used compared to when the value of τ is one slot.

In legacy operations such as beam reporting including RSRP/SINR, only one CPU is used regardless of the number of CMRs configured for the beam reporting. Therefore, when the proposed method is applied to beam reporting, the number of CPUs increases regardless of the number of CMRs (i.e., in the same way as when only one CMR is configured).

### 4) CPU Count Method #4

As another method, the number of CPUs to be used may be determined based on the number of CSI-RS resources included in a burst CSI-RS resource. For example, when the configured burst size (window) is L (i.e., L CSI-RS resources constitute a single burst CSI-RS resource) and the number of CSI-RS resources within a burst CSI-RS resource capable of being processed by one CPU, which is reported as a UE capability, is W, if L > W, the number of CPUs may be increased by a multiple of ceil(L/W). In the N-based CPU count determination proposed in CPU Count Method #1, N may be replaced with ceil(M/W).

### CPU Priority Determination Method for CSI Calculation

If the number of remaining CPUs is smaller than the number of CPUs required for new CSI, CSI priorities are determined according to the existing NR standard, and the remaining CPUs are allocated starting with the highest-priority CSI. That is, CSI is compared in the following order: time domain behavior (periodic CSI (P-CSI), semi-persistent CSI (SP-CSI), or aperiodic CSI (AP-CSI)), reporting quantity, serving cell index, and CSI report configuration ID (report config ID).

It is proposed to add a method of configuring different priorities between CSI for multiple time instances and existing CSI to the existing priority determination method. For example, priority may be given to CSI for multiple time instances or to existing CSI. Such priority comparison may be performed before comparing the time domain behavior, before comparing the reporting quantity, before comparing the serving cell index, or before comparing the CSI report configuration ID.

### CPU Occupancy Time for CSI Calculation

According to the current NR standard, for P-CSI or SP-CSI, the CPU is used from the first symbol of the earliest resource among the most recent CMR/IMR, which is not later than the CSI reference resource in time, until CSI reporting.

However, if CSI is calculated for multiple time instances, the measurement window may not be configured based on the CSI reference resource. Therefore, in this case, it may be specified that the CPU is used from the starting point of the measurement window (if the measurement windows for a CMR and IMR are different, the earliest measurement window), i.e., from the first OFDM symbol of the measurement window.

When W2s for multiple time instances are reported without TD/DD compression, the reporting times of W2 may differ for each W2. For example, a method where an RI/W1/W2/CQI are reported in slot 1, and in slot 2, the RI and W1 are reused while only W2 (or W2 and the CQI) are reported may be considered. In this case, the use of the CPU ends at a point when reporting of W2 for the last time instance is completed.

### CSI Computation Time

According to the current NR standard, the CSI computation time for CSI based on the Type II codebook is determined by Z2 (i.e., Z2, Z2').

For example, when multiple CSI reports via a PUSCH are triggered by a CSI request field included in DCI, the current NR standard specifies that the first UL symbols carrying the multiple CSI reports may not start earlier than Z _{ref}, and the first UL symbol carrying an n-th CSI report among the multiple CSI reports may not start earlier than Z' _{ref}. Here, Z _{ref} is a value proportional to Z2, and Z' _{ref} is a value proportional to Z2'. Specifically, Z2 represents the time from the last symbol of a PDCCH where DCI triggering CSI reports is received to the first symbol for reporting the CSI, and Z2' represents the time from the last symbol of an AP-CSI-RS used for channel measurement for an n-th CSI report to the first symbol for reporting the n-th CSI.

If only one CSI report is performed, Z2 represents the time from the last symbol of a PDCCH on which DCI triggering the CSI report is received to the first symbol for reporting the CSI, and Z2' represents the time from the last symbol of an AP-CSI-RS used for channel measurement for the CSI report to the first symbol for reporting the CSI.

On the other hand, for CSI for multiple time instances, i.e., for CSI based on the Type II codebook, the computational load is greater than that for CSI for a single time instance, and thus, the value of Z2 needs to be increased. To this end, the increase relative to the existing Z2 value may be reported as a UE capability. Alternatively, new Z2 values applicable to CSI for multiple time instances may be defined in a table format.

Additionally, different Z2 values may be applied depending on the number N of multiple time instances. For example, when N = 2, Z2 and Z2' may be set to 50 and 40, respectively. For N = 3, Z2 and Z2' may be set to 60 and 50, respectively, thereby increasing Z2 as N increases.

Additionally, more processing time may be allocated as the time interval between time instances (e.g., τ or TD unit) increases. The wider the time interval, the more complex the UE implementation becomes because it needs to predict CSI for a farther future. For example, the value of Z2 increases when the value of τ is two slots compared to when the value of τ is one slot.

In legacy operations such as beam reporting including RSRP/SINR, the value of Z3 is used as the processing time. Therefore, when the proposed method is applied to beam reporting, Z2 may be replaced with Z3.

Additionally, the values of Z and Z' may vary depending on the starting or ending points of a CSI reporting window. For example, if the CSI reporting window starts at slot 1 and ends at slot 9 and time instances are configured at intervals of two slots, the UE calculates/reports a PMI/CQI based on a channel predicted for each of slots 1, 3, 5, 7, and 9. In this case, if CSI is reported in slot 0, as the starting point (slot 1) or the end point (slot 9) of the CSI reporting window moves farther from the reporting time, slot 0, the complexity of the channel prediction of the UE may increase. Thus, it is desirable to increase the number of CPUs, the value of Z, and the value of Z' as the starting point (slot 1) or the ending point (slot 9) of the CSI reporting window becomes farther from the reporting time. Alternatively, it is desirable to increase the number of CPUs, the value of Z, and the value of Z' as the start point (slot 1) or the end point (slot 9) of the CSI reporting window becomes farther from the CSI reference resource slot.

Additionally, it may be considered that the number of CPUs, the value of Z, and the value of Z' increase based on a CSI measurement window. The CSI measurement window is determined by the number of measurement occasions of a burst (ZP/NZP) CSI-RS for channel or interference measurement and the time intervals between the measurement occasions.

For example, if the number of measurement occasions is 5 and the time interval between measurement occasions is 1 slot, the CSI-RS may be transmitted, received, and measured every slot over five slots at intervals of one slot.

As another example, the following two burst CSI-RS patterns may be considered.
- Burst CSI-RS Pattern #1: The CSI-RS is configured for four measurement occasions at intervals of one slot.
- Burst CSI-RS Pattern #2: The CSI-RS is configured for 8 measurement occasions at intervals of two slots.

In burst CSI-RS pattern #1, CSI-RS resources are configured in each slot over four slots, whereas in burst CSI-RS pattern #2, CSI-RS resources are configured at intervals of two slots over 16 slots. In other words, pattern 2 requires channel measurement over a longer period and at a higher frequency compared to pattern 1. Therefore, since the number of measurement occasions and/or the time interval between measurement occasions in burst CSI-RS pattern #2 is greater than in burst CSI-RS pattern #1, it is desirable to set the values of Z and Z' for pattern #2 to larger values than those for pattern #1. Additionally, it is desirable to set the Z and Z' values used for reporting CSI with the CMR/IMR of a burst CSI-RS pattern larger than the Z and Z' values used for reporting CSI with the conventional CMR/IMR other than the burst CSI-RS pattern.

Similar to the method of determining the values of Z and Z', the number of CPUs may vary depending on the CSI measurement window. As the number of measurement occasions and/or the time interval between measurement occasions increases, more CPUs may be allocated/used.

If a burst CSI-RS is transmitted after Z symbols from the last symbol of AP CSI-triggering DCI, a CSI report for the CSI-RS may be omitted, or the most recently reported CSI, which has not been updated, may be retransmitted. Alternatively, only the first measurement occasion of the burst CSI-RS may be used to calculate and report the CSI. Similarly, the report for a burst CSI-RS transmitted after Z symbols from the last symbol of a CMR/IMR may be omitted. Alternatively, the most recently reported CSI, which has not been updated, may be retransmitted, or CSI may be calculated and reported using only the first measurement occasion of the burst CSI-RS.

On the other hand, the Z and Z' values may be increased based on the number of NZP-CSI-RS resources set as the CMR. To enable the UE to measure a channel over multiple times/slots, the BS may configure K CSI-RS resources transmitted at different times and interpret an i-th port of the CSI-RS resources as the same port. In this case, the Z and Z' values may be increased depending on K. For example, the Z and Z' values may be increased by K * alpha or (K - 1) * alpha. Alternatively, the ranges of K may be predefined, and incremental values may be set separately for each range.

### Fallback CSI Reporting

The legacy operation involves either ignoring DCI that triggers CSI or not updating the CSI if the CSI processing time or the number of CPUs is insufficient.

On the other hand, according to the present disclosure, if the processing time of CSI for multiple time instances is insufficient, the UE may attempt to calculate and report CSI for a single time instance using a CMR/IMR configured for the CSI in the same way as in the prior art, instead of using the CSI for the multiple time instances. Specifically, when applying the existing Z2 value, the UE determines whether the processing time of the CSI for the single time instance is sufficient. If the processing time is sufficient, the UE calculates and reports the CSI for the single time instance instead of the CSI for the multiple time instances.

Similarly, if the number of CPUs of the CSI for the multiple time instances is greater than the number of available CPUs, the UE may not update the CSI. In addition, the UE may attempt to calculate and report the CSI for the single time instance rather than the CSI for the multiple time instances. That is, if the number of CPUs of the CSI for the single time instance is less than or equal to the number of available CPUs, the UE may calculate and report the CSI for the single time instance rather than the CSI for the multiple time instances.

The CSI for the single time instance may, for example, refer to CSI calculated based on an existing CSI reference resource.

When falling back to the CSI for the single time instance, a codebook to be used may be indicated by the BS or be predefined. For example, a Type I codebook may be specified. Alternatively, a Type II codebook may be used, and more particularly, a legacy Type II codebook where TD/DD compression is not applied (codebook in 3GPP NR standards Release 15 to Release 17) may be specified.

Alternatively, if the CPU/processing time is insufficient to calculate the entire CSI quantity, only a part of CSI may be reported. For example, only part 1 CSI or RI and/or CQI values may be calculated and reported, while a PMI is omitted from reporting or not updated.

Alternatively, if the CPU/processing time of CSI for multiple time instances is insufficient, the UE may select only some time instances (e.g., odd instances, even instances, the first time instance, or the last time instance) for calculation and reporting. If the CPU/processing time of CSI for the selected time instances is sufficient, the UE calculates and reports the CSI for the selected time instances. For example, among N time instances, the UE may calculate and report CSI for two end time instances: the first time instance and the last time instance.

On the other hand, if the CSI processing time and/or the number of CPUs is insufficient, a method of reporting only CSI for time instances from the first instance to an N-th instance, which may be calculated and reported within the remaining CSI processing time/CPUs, may be considered. For example, if CSI for 8 time instances is required but the processing time and/or the number of CPUs is insufficient, only CSI for the first four time instances capable of being processed within a given processing time and/or CPUs may be reported. In this case, the first four elements of a basis vector used for TD/DD compression may be used, and the remaining elements may be set to 0 for codebook generation.

Alternatively, the UE may report the two ends of a time window for CSI reporting, and the BS may calculate intermediate CSI values through interpolation. To this end, assuming there are a total of K time instances in chronological order, CSI may be reported for earliest and latest time instances within a given CSI processing time/CPUs in the following sequence: the first time instance, the K-th time instance, the second time instance, the (K-1)-th time instance, the third time instance, the (K-2)-th time instance, and so on.

Additionally, among multiple time instances, a single time instance may be determined as a specific instance, which may be configured by the BS for the UE or selected by the UE and reported along with CSI. The single time instance may be fixed as a time instance located in the middle of the multiple time instances and reported. Alternatively, the single time instance may be defined as a superset encompassing all multiple time instances. For example, if there are 8 time instances and the duration of each time instance is two slots, a single time instance may correspond to a total of 16 slots (8 * 2) including all 8 time instances. The UE reports one CSI representing the extended time period. This method is similar to reporting a single wideband (WB) CSI for a wideband frequency range, but instead of calculating CSI in the frequency domain, long-term CSI is calculated in the time domain.

On the other hand, the single time instance may be fixed to the CSI reference resource slot or to the first time instance corresponding to the earliest time among the multiple time instances. Alternatively, if the CSI processing time and/or the number of CPUs is insufficient, the number of DD/TD basis vectors may be set to 1, thereby reducing the codebook calculation complexity.

### UE Capability Reporting

The method of increasing the number of CPUs and the method of extending the values of Z/Z' may be considered alternatives. For example, if CSI is calculated simultaneously within a short time using parallel processing while maintaining the values of Z/Z', the number of CPUs needs to be increased. If serial processing is applied, the number of CPUs may remain unchanged, and only the values of Z/Z' may be increased. From this perspective, it may also be considered to report whether to apply the CPU count method and/or Z/Z' values as a UE capability.

For example, UE 1 reports that UE 1 uses the proposed CPU count method for CSI for multiple time instances while applying the existing Z/Z' values. On the other hand, UE 2 reports that UE 2 uses the existing CPU count method and applies increased Z/Z' values.

### <CSI Processing Relaxation Based on CQI Calculation>

According to the current standardization progress, when the UE uses a TD/DD compression codebook to compress and report PMIs for multiple time instances, the UE may report X CQIs for a single wideband (WB) or each subband. The value of X is 1 or 2, which is indicated by the BS.

When X is 1, the UE may choose one of two implementation methods to calculate the CQI. The first implementation method calculates a single CQI based on the earliest time instance. The second implementation method calculates a single CQI based on both the earliest and the latest time instances.

If X is 2, the UE calculates a single CQI based on the earliest time instance and another CQI based on the middle time instance.

Based on the value of X, or for X = 1, it is proposed to increase the number of CPUs and/or the value of Z depending on the aforementioned implementation methods. When X = 2, since more CQI calculations are required compared to X = 1, it is desirable to increase the number of CPUs and/or the value of Z. To this end, for X = 2, one additional CPU may be occupied compared to X = 1, or the Z value may be increased. For example, when X = 1, one CPU is occupied. When X = 2, two CPUs are occupied.

Similarly, when X = 1, the second implementation method involves more calculations compared to the first implementation method. Thus, in the second implementation method, one additional CPU may be occupied or the Z value may be increased compared to the first implementation method. For example, in the first implementation method, one CPU is occupied. In the second implementation method, two CPUs are occupied.

### <CPU Occupation Time>

According to the current NR standard, for a first CSI report in SP-CSI reporting and AP-CSI reporting, CPUs are occupied from a time of receiving triggering DCI to a CSI reporting time. For other CSI reports (i.e., for subsequent CSI reports after the first CSI report in the SP-CSI reporting and the AP-CSI reporting), CPUs are occupied from the starting symbol of the earliest CMR/IMR resource of the latest CMR/IMR occasion located in a CSI reference resource slot or an earlier slot to the CSI reporting time.

When the UE calculates and reports CSI based on channel prediction (when a TD/DD compression codebook is used, when multiple time instances are configured, or when long-term CSI is calculated for a single time instance over multiple slot durations), it is proposed to change the CSI reference resource slot, which is the starting point of a CPU occupation time, or the most recent CSI-RS/CSI-IM/SSB occasion prior to the CSI reference resource slot to the k-th most recent CSI-RS/CSI-IM/SSB occasion. This is because using only the most recent CMR is insufficient for CSI prediction, and multiple recent CMRs need to be utilized. The value of k may be configured by the BS or determined by the UE and reported.

Alternatively, k may be set equal to the number of time instances (i.e., the length of a TD/DD basis vector, N4) or determined as N4 + C, where C is a specific constant. This is because using the number of channel measurement instances equal to or greater than the number N4 of time instances to be predicted is necessary to ensure accurate channel estimation for N4 time instances. In other words, the number of measured channels is at least equal to or exceeds the number of channels to be estimated.

To increase the Z and Z' values, a constant c1 * N4 may be added to the existing Z and Z' values. The constant c1 may be a value reported by the UE as a UE capability to the BS, a value indicated by the BS to the UE, or a fixed value. This method is to reflect an increase in the CSI calculation complexity as the number of time instances increases in the calculation of Z and Z'. Additionally, even if N4 = 1, if long-term CSI for multiple slots is calculated, a constant c2 may be added to the existing Z and Z' values. In this case, c1 and c2 may be the same or different values. Furthermore, the constant applied to Z and the constant applied to Z' may also be different.

### Upper Limit of Number of CPUs and CPU Occupation Time

To prevent excessive increases in the number of CPUs, the value of Z, and the value of Z' as the number N of time instances increases, an upper bound U may be set for CPUs, Z, and Z'. For example, if the determined number of CPUs is L, the final number of CPUs is determined as the smaller value between L and U, i.e., min(L, U). The value of U may be reported by the UE as a UE capability to the BS or configured by the BS. Alternatively, the UE may report the number of CPUs possessed by the UE as a UE capability, and this value may be used as U.

For example, simultaneousCSI-ReportsPerCC, specified in 3GPP 38.331, represents the number of CPUs that the UE is capable of using on a single component carrier (CC). This value may be set as the upper bound U for CPUs, Z, and Z'.

Similarly, to prevent excessive increases the value of Z and the value of Z' as the value of N increases, an upper bound U may be set for Z and Z'. That is, if the Z and Z' values determined by one of the proposed methods are L symbols, the final Z and Z' values are determined as min(L, U). The value of U may correspond to the number of CPUs, the value of Z, and/or the value of Z' calculated when N equals a specific constant C.

For example, if C is 2 and N is 2, and the number of CPUs calculated according to the present disclosure is P, U is set to P.

The methods proposed in the present disclosure may be applied in various scenarios, such as when the UE calculates and reports CSI based on channel prediction, when a TD/DD compression codebook is used, when multiple time instances are configured, or when long-term CSI is calculated for a single time instance over multiple slot durations.

Although the present disclosure is primarily described based on TD compression codebooks, the proposed methods may be equally applied to DD compression codebooks.

The methods proposed in the present disclosure may be finally applied through combination /integration thereof.

The methods proposed in the present disclosure may also be extended and applied to cases where AI/ML UEs report CSI calculated by predicting a future channel.

The methods proposed in the present disclosure have been described based on application to CSI for multiple time instances. However, even for CSI for a single time instance, if the UE reports CSI calculated by predicting a future channel (e.g., if the UE calculates and reports CSI for a channel at a CSI reporting time or afterward), the proposals may be extended and applied.

Additionally, since beam reporting including RSRP/SINR is a type of CSI reporting, the methods proposed in the present disclosure may be applied to the beam reporting.

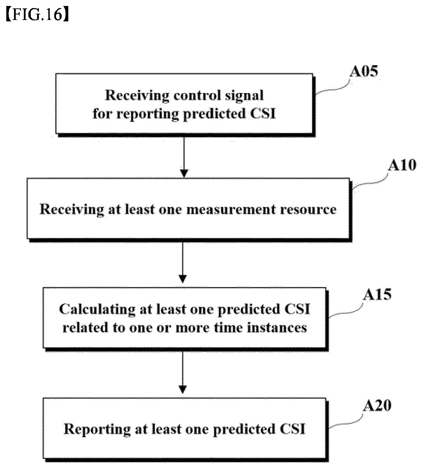

FIG. 16 is a flowchart illustrating an example of reporting CSI according to embodiments of the present disclosure. In particular, FIG. 16 relates to an example of a method in which a UE transmits predicted CSI to a BS.

Referring to FIG. 16, the UE receives a control signal for predicted CSI reporting from the BS in step A05. In particular, the control signal for the predicted CSI reporting includes DCI received on a PDCCH.

Next, in step A10, the UE receives at least one measurement resource from the BS based on the control signal for the predicted CSI reporting.

Next, in step A15, the UE measures at least one predicted CSI for one or more time instances based on the at least one measurement resource. Specifically, the UE estimates PMIs respectively corresponding to the one or more time instances and compresses the estimated PMIs based on a TD compression codebook, and obtains the at least one predicted CSI, which includes the compressed PMIs.

Finally, in step A20, the UE transmits the at least one predicted CSI to the BS. Preferably, a first minimum time interval from receiving the control signal for the predicted CSI reporting to transmitting the at least one predicted CSI is determined based on the size of a measurement window. The size of the measurement window is determined based on the number of CMRs among the at least one measurement resource. Additionally, if the number of CMRs is two or more, the size of the measurement window is determined based on the number of CMRs and an interval between the CMRs.

Additionally, the first minimum time interval and a second minimum time interval, which is from receiving all measurement resources configured by the BS for reporting the at least one predicted CSI to transmitting the at least one predicted CSI, increase based on the number of time instances.

Additionally, the number of CPUs required to calculate the predicted CSI, specifically, the number of processing units capable of calculating CSI simultaneously, is determined based on at least one of the number of CMRs or the number of time instances.

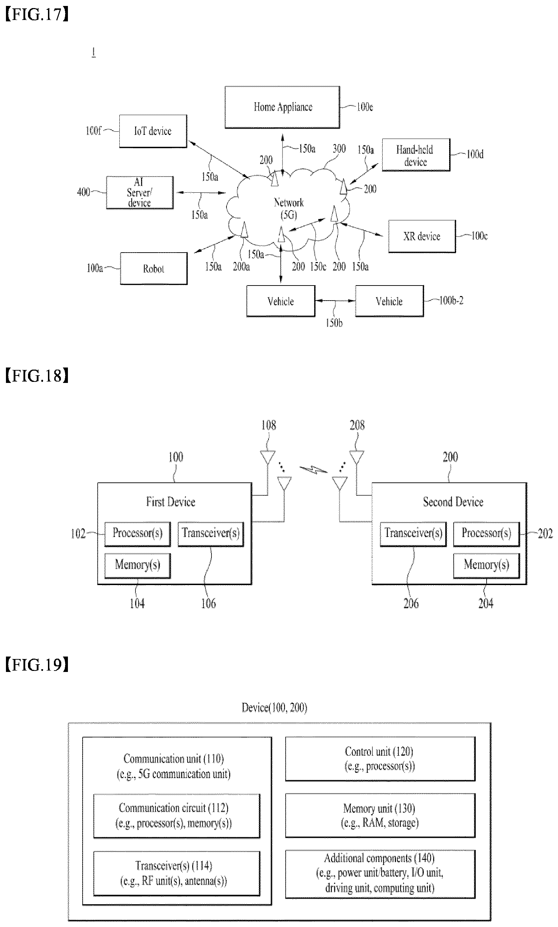

FIG. 17 illustrates an exemplary communication system to which the embodiment is applied.

Referring to FIG. 17, a communication system 1 applied to the embodiment includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the embodiment.

FIG. 18 illustrates exemplary wireless devices to which the embodiment is applicable.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the embodiment, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the embodiment, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 19 illustrates other exemplary wireless devices to which the embodiment is applied. The wireless devices may be implemented in various forms according to a use case/service (see FIG. 17).

Referring to FIG. 19, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

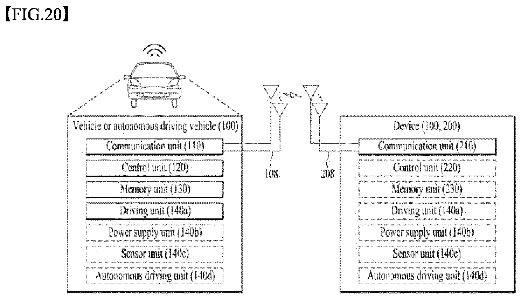

FIG. 20 illustrates an exemplary vehicle or autonomous driving vehicle to which the embodiment. The vehicle or autonomous driving vehicle may be implemented as a mobile robot, a car, a train, a manned/unmanned aerial vehicle (AV), a ship, or the like.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 19 illustrates other exemplary wireless devices to which the embodiment is applied. The wireless devices may be implemented in various forms according to a use case/service. (see FIG. 17)

Referring to FIG. 19, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 20 illustrates an exemplary vehicle or autonomous driving vehicle to which the embodiment. The vehicle or autonomous driving vehicle may be implemented as a mobile robot, a car, a train, a manned/unmanned aerial vehicle (AV), a ship, or the like.

Referring to FIG. 20, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 19, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Those skilled in the art will appreciate that the embodiment may be carried out in other specific ways than those set forth herein without departing from the spirit and essential characteristics of the embodiment. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. It is obvious to those skilled in the art that claims that are not explicitly cited in each other in the appended claims may be presented in combination as an embodiment or included as a new claim by a subsequent amendment after the application is filed.

It will be apparent to those skilled in the art that the disclosure may be embodied in other specific forms without departing from the scope of the present disclosure. Accordingly, the above detailed description should not be construed as limiting in all respects but should be considered as illustrative. The scope of the disclosure should be determined by a reasonable interpretation of the appended claims, and all changes within the equivalent scope of the present disclosure are intended to be included in the scope of the disclosure.

### INDUSTRIAL APPLICABILITY

The disclosure is applicable to UEs, BSs, or other apparatuses in a wireless mobile communication system.

## Claims

1. A method of transmitting, by a user equipment (UE), predicted channel state information (CSI) to a base station (BS) in a wireless communication system, the method comprising:
receiving a control signal for predicted CSI reporting from the BS;
receiving at least one measurement resource from the BS based on the control signal for the predicted CSI reporting;
measuring at least one predicted CSI for one or more time instances based on the at least one measurement resource; and
transmitting the at least one predicted CSI to the BS,
wherein a first minimum time interval from receiving the control signal for the predicted CSI reporting to transmitting the at least one predicted CSI is determined based on a size of a measurement window, and
wherein the size of the measurement window is determined based on a number of channel measurement resources (CMRs) among the at least one measurement resource.

2. The method of claim 1, wherein a number of CSI processing units (CPUs) for calculating the predicted CSI is determined based on at least one of the number of the CMRs and a number of the time instances.

3. The method of claim 1, wherein the first minimum time interval and a second minimum time interval from receiving all measurement resources configured by the BS for reporting the at least one predicted CSI to transmitting the at least one predicted CSI increase based on a number of the time instances.

4. The method of claim 1, wherein measuring the at least one predicted CSI comprises:
estimating precoding matrix indices (PMIs) respectively corresponding to the one or more time instances and compressing the estimated PMIs based on a time domain (TD) compression codebook; and
obtaining the at least one predicted CSI including the compressed PMIs.

5. The method of claim 1, wherein based on that the number of the CMRs is two or more, the size of the measurement window is determined based on the number of the CMRs and an interval between the CMRs.

6. The method of claim 1, wherein the control signal for the predicted CSI reporting includes downlink control information (DCI) received on a physical downlink control channel (PDCCH).

7. A user equipment (UE) in a wireless communication system, the UE comprising:
at least one transceiver;
at least one processor; and
at least one computer memory operably connected to the at least one processor and storing instructions that, when executed, cause the at least one processor to perform operations comprising:
receiving a control signal for predicted channel state information (CSI) reporting from a base station (BS);
receiving at least one measurement resource from the BS based on the control signal for the predicted CSI reporting;
measuring at least one predicted CSI for one or more time instances based on the at least one measurement resource; and
transmitting the at least one predicted CSI to the BS,
wherein a first minimum time interval from receiving the control signal for the predicted CSI reporting to transmitting the at least one predicted CSI is determined based on a size of a measurement window, and
wherein the size of the measurement window is determined based on a number of channel measurement resources (CMRs) among the at least one measurement resource.

8. The UE of claim 7, wherein a number of CSI processing units (CPUs) for calculating the predicted CSI is determined based on at least one of the number of the CMRs and a number of the time instances.

9. The UE of claim 7, wherein the first minimum time interval and a second minimum time interval from receiving all measurement resources configured by the BS for reporting the at least one predicted CSI to transmitting the at least one predicted CSI increase based on a number of the time instances.

10. The UE of claim 7, wherein measuring the at least one predicted CSI comprises:
estimating precoding matrix indices (PMIs) respectively corresponding to the one or more time instances and compressing the estimated PMIs based on a time domain (TD) compression codebook; and
obtaining the at least one predicted CSI including the compressed PMIs.

11. The UE of claim 7, wherein based on that the number of the CMRs is two or more, the size of the measurement window is determined based on the number of the CMRs and an interval between the CMRs.

12. The UE of claim 7, wherein the control signal for the predicted CSI reporting includes downlink control information (DCI) received on a physical downlink control channel (PDCCH).

13. A processing device in a wireless communication system, the processing device comprising:
at least one processor; and
at least one computer memory operably connected to the at least one processor and storing instructions that, when executed, cause the at least one processor to perform operations for a user equipment (UE), the operations comprising:
receiving a control signal for predicted channel state information (CSI) reporting from a base station (BS);
receiving at least one measurement resource from the BS based on the control signal for the predicted CSI reporting;
measuring at least one predicted CSI for one or more time instances based on the at least one measurement resource; and
transmitting the at least one predicted CSI to the BS,
wherein a first minimum time interval from receiving the control signal for the predicted CSI reporting to transmitting the at least one predicted CSI is determined based on a size of a measurement window, and
wherein the size of the measurement window is determined based on a number of channel measurement resources (CMRs) among the at least one measurement resource.

14. A computer-readable storage medium configured to store at least one program code comprising instructions that, when executed, cause at least one processor to perform operations for a user equipment (UE), the operations comprising:
receiving a control signal for predicted channel state information (CSI) reporting from a base station (BS);
receiving at least one measurement resource from the BS based on the control signal for the predicted CSI reporting;
measuring at least one predicted CSI for one or more time instances based on the at least one measurement resource; and
transmitting the at least one predicted CSI to the BS,
wherein a first minimum time interval from receiving the control signal for the predicted CSI reporting to transmitting the at least one predicted CSI is determined based on a size of a measurement window, and
wherein the size of the measurement window is determined based on a number of channel measurement resources (CMRs) among the at least one measurement resource.
